# FASCICULE DE BREVET EUROPEEN

(11) **EP 3 083 393 B1**
(45) Date de publication et mention de la délivrance du brevet: **04.04.2018**
(21) Numéro de dépôt: 14827833.6
(22) Date de dépôt: 15.12.2014
(51) Int. Cl.: B63H 16/02

(54) **SYSTÈME DE FIXATION D'UNE CHAUSSURE DANS UN BATEAU D'AVIRON**
SCHUHBINDUNGSSYSTEM FÜR EIN RUDERBOOT
SHOE BINDING SYSTEM FOR A ROWING BOAT

(30) Priorité: 20.12.2013 FR 1363178
(43) Date de publication de la demande: 26.10.2016
(73) Titulaire: Mano, Thierry, 84000 Avignon (FR)
(72) Inventeur: Mano, Thierry, 84000 Avignon (FR)
(74) Mandataire: Allain, Laurent
(86) Numéro de dépôt international: PCT/FR2014/053328
(87) Numéro de publication internationale: WO 2015/092240

(56) Documents cités:
- FR-A1- 2 388 718
- FR-A1- 2 421 105
- US-A1- 2009 241 827

## Description

L'invention se rapporte à un système de fixation d'une chaussure dans un bateau d'aviron. Généralement, un individu pratiquant l'aviron dans un bateau, est assis sur un siège, qui est mobile en translation selon un axe longitudinal de ce bateau. L'individu porte des chaussures, qui sont fixées sur un repose-pied, de manière à ce que ses pieds ne puissent pas glisser sur ledit repose-pied durant la pratique de cette activité. Plus spécifiquement, l'invention concerne un système de fixation amélioré d'une chaussure sur un repose-pied de bateau d'aviron.

Les systèmes de fixations d'une chaussure sur un repose-pied de bateau d'aviron existent et ont déjà fait l'objet de brevets. On peut, par exemple, citer la demande de brevet US2012/0234226, qui se rapporte à un tel système de fixation, et dont la particularité est de pouvoir ajuster les mouvements latéraux de la chaussure sur le repose-pied du bateau d'aviron.

La demande de brevet FR 2 388 718 A1 décrit un autre système de fixation d'une chaussure sur un repose-pied de bateau d'aviron dans lequel un levier d'actionnement permet la désolidarisation de la chaussure.

Or, si ces systèmes de fixation présentent de bonnes performances en matière de liaison de la chaussure sur le repose-pied, ils possèdent néanmoins un faible niveau de sécurité.

En effet, dans une situation idéale, un système de fixation d'une chaussure sur un repose-pied de bateau d'aviron, doit présenter deux caractéristiques essentielles :
- assurer une fixation solide de la chaussure sur le repose-pied, de manière à éviter que la chaussure ne se désolidarise facilement dudit repose-pied, dès que le pratiquant exerce la moindre pression avec son pied,
- permettre une désolidarisation instantanée et aisée de la chaussure dudit repose-pied, dans le cas d'un chavirage accidentel du bateau d'aviron, de façon à permettre à un individu de s'extirper facilement dudit bateau.

Les systèmes de fixation selon l'invention sont configurés pour posséder ces deux caractéristiques.

L'invention a pour objet un système de fixation d'une chaussure sur un repose-pied d'un bateau d'aviron, ledit système de fixation comprenant une semelle et un repose-pied et ledit repose-pied étant assimilable à une plaque possédant une face inférieure et une face supérieure.

La principale caractéristique d'un système de fixation selon l'invention, est qu'il comprend au moins une butée mobile saillant de la face supérieure et un levier d'actionnement rigide saillant de la face inférieure, ledit levier étant relié à ladite au moins une butée de sorte que le déplacement dudit levier entraine le déplacement de ladite au moins une butée entre une position déployée pour laquelle elle vient se loger dans un évidement de la semelle, et une position escamotée pour laquelle elle permet une désolidarisation de la chaussure avec le repose-pied. De cette manière, l'insertion d'au moins une butée dans l'évidement de la chaussure permet un ancrage solide de ladite chaussure dans le repose-pied, pour éviter tout glissement intempestif de ladite chaussure sur ledit repose-pied lors de la pratique de l'aviron. Un tel système possède également un niveau de sécurité élevé, grâce à la présence du levier dont le déplacement permet une rétractation immédiate de chaque butée, afin de libérer simultanément la chaussure. Ainsi, dans le cas d'un retournement accidentel du bateau, une personne peut s'extirper instantanément de celui-ci afin de se retrouver rapidement à l'air libre et éviter les situations dangereuses. Il est supposé que chaque butée est matérialisée par une pièce solide dont la géométrie et la taille sont adaptées aux caractéristiques de l'évidement. Il est supposé que le levier d'actionnement est relié mécaniquement à chaque butée de sorte que c'est le mouvement du levier qui imprime directement le mouvement de chaque butée. Conventionnellement, le repose-pied est une plaque positionnée de façon inclinée dans le bateau d'aviron. Les notions de « face supérieure » et « face inférieure » sont à considérer comme si le repose-pied était monté sur le bateau. L'évidement pratiqué dans la semelle de la chaussure, n'empêche nullement une personne de pouvoir marcher avec lesdites chaussures. Avec un système de fixation selon l'invention, une personne peut pratiquer l'aviron avec ses propres chaussures. Le terme « semelle » désigne schématiquement, une épaisseur de matière située au niveau d'une zone inférieure de la chaussure. Cette semelle peut, soit faire directement partie de la chaussure, soit être ajoutée à une chaussure de sport usuelle. Le système de fixation selon l'invention, comprend un plot saillant de la face supérieure du repose-pied et supportant chaque butée, ledit plot étant destiné à venir se loger dans l'évidement de la chaussure, et chaque butée étant apte à passer d'une position déployée pour laquelle elle émerge dudit plot à une position escamotée pour laquelle elle se retrouve à l'intérieur dudit plot. Autrement dit, le plot sert d'élément de guidage pour permettre de prépositionner la chaussure sur le repose-pied en faisant correspondre ledit plot avec l'évidement de la semelle. Tant que les butées sont escamotées dans le plot, une personne peut toujours retirer sa chaussure du repose-pied. Lorsque lesdites butées émergent du plot, ladite personne ne peut plus retirer sa chaussure dudit repose-pied sans actionner le levier. Il est supposé que les dimensions de l'ensemble constitué par le plot et les butées en position déployée sont supérieures à celles de l'évidement. Le plot doit avoir une forme qui est complémentaire de celle de l'évidement, de façon à assurer un logement stable et optimisé dudit plot dans ledit évidement.

De façon préférentielle, le système de fixation selon l'invention comprend quatre butées réparties régulièrement autour du plot, deux butées successives se retrouvant à 90° l'une de l'autre. La présence de quatre butée rend homogène la solidarisation de la chaussure au repose-pied. De façon plus précise, deux butées successives sont portées par deux axes perpendiculaires passant par le centre du plot.

Préférentiellement, le plot est cylindrique et saille de la face supérieure de manière à ce que son axe de révolution soit perpendiculaire à ladite face, chaque butée émergeant de la surface latérale dudit plot lorsqu'elle se retrouve dans une position déployée. De façon avantageuse, pour cette configuration, chaque butée se déplace en translation suivant une direction radiale du plot pour passer d'une position déployée à une position escamotée et inversement. Puisque le plot est cylindrique, il est implicitement supposé qu'il possède une surface latérale.

De façon avantageuse, l'évidement de la semelle possède une gorge annulaire permettant d'élargir ledit évidement dans ladite semelle, chaque butée venant se loger au fond de ladite gorge lorsqu'elle se retrouve dans une position déployée. De cette manière, une fois que chaque butée s'est déployée à l'intérieur de la gorge, elle agit comme un organe de blocage de la chaussure dans le repose-pied, en empêchant un retrait de ladite chaussure par un simple coulissement le long du plot. La gorge annulaire permet de ménager un espace libre entre le plot et la semelle.

Avantageusement, chaque butée est reliée au levier au moyen d'un élément relais, le levier étant monté mobile sur la face inférieure du repose-pied, un déplacement dudit levier entrainant, via chaque élément relais, une translation de chaque butée dans le plot pour passer d'une position déployée à une position escamotée et inversement. Autrement dit, le mouvement du levier se transmet directement aux butées par l'intermédiaire de chaque élément relais. Le terme « inversement » signifie que suivant le sens de manipulation du levier, les butées peuvent passer d'une position déployée à une position escamotée, ou d'une position escamotée à une position déployée.

De façon préférentielle, chaque élément relais est un fil de liaison, le levier étant mobile en rotation entre une première position permettant aux butées de se retrouver dans une position déployée et une deuxième position permettant auxdites butées de se retrouver dans une position escamotée. Un fil constitue un élément relais qui est léger et qui peut transmettre facilement un mouvement par un effort de traction. Avantageusement, il est supposé que les fils sont suffisamment rigides pour transmettre directement le mouvement du levier, aux butées, sans se déformer préalablement.

Préférentiellement, le levier est configuré pour exercer, par inertie, un effort suffisant sur les éléments relais, de manière à maintenir chaque butée dans une position déployée. Ainsi, lorsqu'une personne est assise dans le bateau d'aviron et a ses chaussures fixées sur le repose-pied, le levier qui est placé sous ledit repose-pied exerce par inertie une tension sur les éléments relais, qui permettent de maintenir en permanence les butées dans une position déployée. Ce levier peut être réalisé dans un matériau lourd, comme par exemple un métal approprié, ou bien être réalisé dans un matériau relativement léger et être lesté au moyen d'une masse de matériau lourd.

De façon avantageuse, un retournement accidentel du bateau provoque un déplacement du levier par inertie, qui entraine un escamotage de chaque butée dans le plot, permettant de libérer chaque chaussure du repose-pied. Autrement dit, lorsque le bateau se retourne, le levier se retrouve au dessus du repose-pied et a donc tendance à se déplacer par inertie pour se rapprocher dudit repose-pied. Ce rapprochement engendre un effort de tension au niveau des éléments relais se traduisant par un escamotage instantané et systématique des butées, qui libèrent aussitôt la chaussure du repose-pied sur laquelle elle était fixée. Ainsi, en situation de danger, lorsque le bateau chavire, un individu peut s'extirper instantanément du bateau sans avoir à procéder à une quelconque opération ou manipulation, pour libérer ses chaussures. En effet, le mouvement naturel de basculement du levier lors de ce chavirage, et réalisé par inertie, assure l'escamotage des butées de retenue.

Avantageusement, le plot, les butées et les fils de liaison sont en métal. De façon générale, ces éléments peuvent être réalisés dans un matériau léger présentant une bonne tenue mécanique, comme par exemple, du plastique.

Les systèmes de fixation selon l'invention présentent l'avantage de posséder une double fonctionnalité, l'une permettant d'assurer une fixation solide de la chaussure lors d'une phase de pratique de l'aviron, et l'autre permettant d'assurer un niveau de sécurité élevé pour un pratiquant d'aviron, en engendrant une désolidarisation instantanée et systématique de ladite chaussure, en cas de chavirage du bateau. De cette manière, une personne en difficulté lors d'un tel chavirage, n'aura aucune action particulière à mener pour libérer ses chaussures du repose-pied, ladite libération étant effectuée automatiquement. Ils ont de plus l'avantage d'être fiables et bien maîtrisés, dans la mesure où ils sont de conception simple et qu'ils font intervenir un nombre limité de pièces. Ils présentent enfin l'avantage d'être d'une masse et d'un encombrement constants, par rapport aux systèmes de fixation déjà existants et qui ne présentent pas cette double fonctionnalité.

On donne ci-après, une description détaillée d'un mode de réalisation préféré d'un système de fixation selon l'invention, en se référant aux figures 1 à 8.
- La figure 1 est une vue schématique en coupe d'un système de fixation selon l'invention, permettant de fixer une chaussure à un repose-pied de bateau d'aviron,
- La figure 2 est une vue schématique de coté d'un plot d'un système de fixation selon l'invention et supportant quatre butées,
- La figure 3 est une vue schématique de coté des quatre butées et de fils de liaison d'un système de fixation selon l'invention,
- La figure 4A est une vue schématique de coté d'une moitié du plot de la figure 2, la butée étant dans une position escamotée,
- La figure 4B est une vue schématique de coté de la moitié du plot de la figure 2, la butée étant dans une position déployée,
- La figure 5A est une schématique du dessus du plot de la figure 2, les quatre butées étant dans une position escamotée,
- La figure 5B est une schématique du dessus du plot de la figure 2, les quatre butées étant dans une position déployée,
- La figure 6 est une vue schématique en coupe d'un système de fixation selon l'invention, dans une configuration de fixation de la chaussure,
- La figure 7 est une vue schématique en coupe d'un système de fixation selon l'invention, dans une configuration de libération de la chaussure,
- La figure 8 est une vue schématique en coupe d'un système de fixation selon l'invention ayant subi une rotation de 180° pour matérialiser la situation d'un chavirage d'un bateau doté dudit système de fixation.

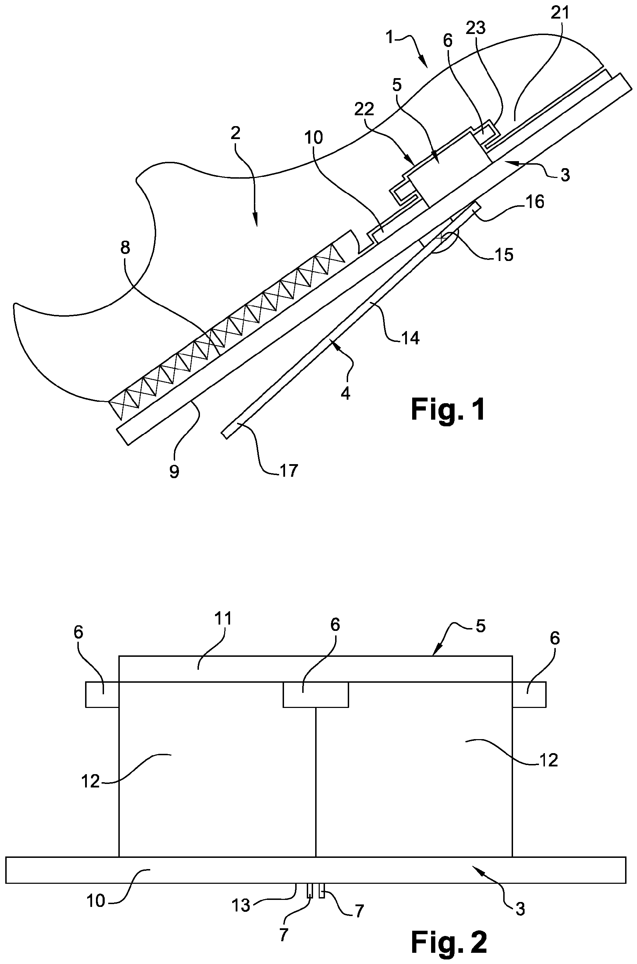

En se référant à la figure 1, un système de fixation 1 selon l'invention, permet de fixer solidement une chaussure 2 sur un repose-pied 3 d'un bateau d'aviron. En effet, il est important de fixer étroitement les chaussures 2 d'un pratiquant sur ledit repose-pied 3, afin d'éviter qu'elles ne bougent à chaque effort produit par ledit pratiquant lorsqu'il manipule une rame. Un tel dispositif 1 fait intervenir un levier d'actionnement 4, un plot 5 et des butées mobiles 6 reliées audit levier 4 par l'intermédiaire de fils 7 de liaison.

En se référant aux figures 1, 6, 7 et 8 un repose-pied 3 de bateau d'aviron est schématiquement représenté par une plaque d'épaisseur constante, possédant une face plane supérieure 8 et une face plane inférieure 9. Généralement, cette plaque 3 est inclinée pour permettre à une personne en train de pratiquer l'aviron, de poser ses pieds sur la face supérieure 8 de ladite plaque 3. Le levier d'actionnement 4 est assimilable à une tige 14 allongée, qui est montée en rotation autour d'un axe 15 horizontal. Cet axe 15 est inscrit dans un plan parallèle à la face inférieure 9 du repose-pied 3, ledit axe 15 émergeant de ladite face inférieure 9 en étant situé sous celle-ci. La tige 14 présente selon son axe longitudinal, une première extrémité 16 qui est destinée à être reliée aux fils de liaison 7, et une deuxième extrémité 17 libre. La tige 14 est montée sur l'axe de rotation 15, au niveau d'une zone qui est voisine de sa première extrémité 16, et peut donc pivoter dans un plan vertical. Il est supposé que le levier 4 possède une masse importante, de sorte qu'il puisse exercer, par inertie, un effort conséquent sur les fils 7 de liaison.

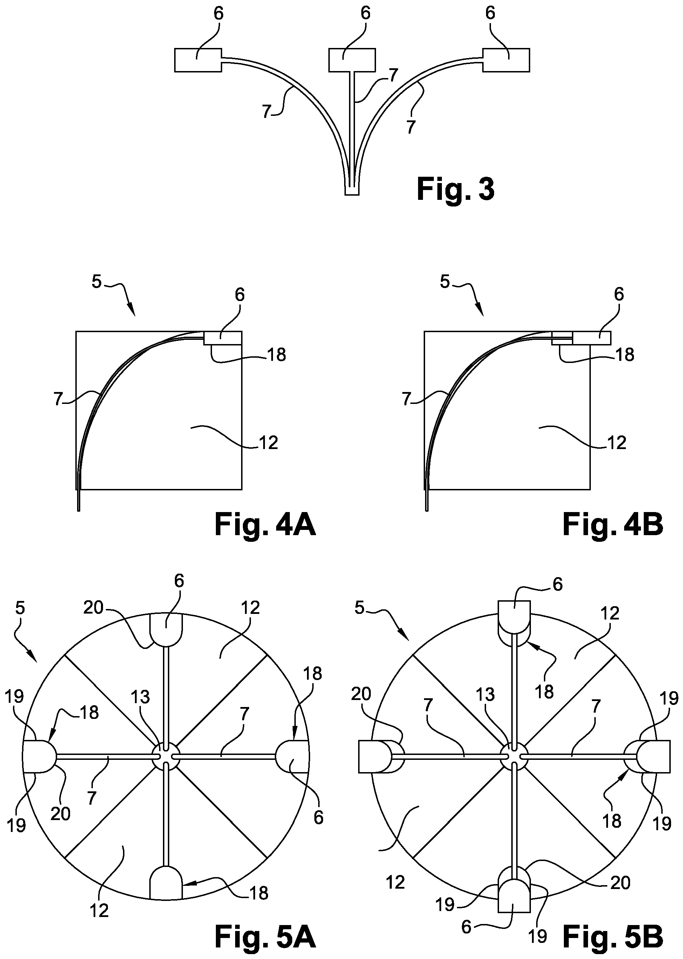

En se référant aux figures 2, 5A et 5B le plot 5 comprend une embase cylindrique 10 destinée à venir se fixer sur la face supérieure 8 du repose-pied 3, quatre pièces 12 formant chacune un quart de cylindre et un couvercle 11 cylindrique. Les quatre pièces 12 sont disposées entre elles pour former un cylindre et sont délimitées, d'une part, par ladite embase 10, et d'autre part, par ledit couvercle 11. Le couvercle 11, l'embase 10 et le cylindre résultant des quatre pièces 12 sont coaxiaux, de manière à ce que le plot 5 présente un axe de révolution. Ledit plot 5 est ainsi amené à être placée sur la face supérieure 8 du repose-pied 3, dans une position pour laquelle son axe de révolution est perpendiculaire à ladite face 8. L'embase 10 est dotée d'une ouverture centrale 13, destinée à venir se superposer à une ouverture correspondante du repose-pied 3. Ladite embase est préférentiellement vissée sur le repose-pied 3. Ladite embase 10 et ledit couvercle 11 sont préférentiellement vissés sur les pièces 12 du plot 5.

En se référant à la figure 3, le plot 5 renferme un mécanisme de blocage/ déblocage de la chaussure 2 sur le repose-pied 3, fondé sur quatre butées 6 et quatre fils de liaison 7. Chaque fil de liaison 7 relie ainsi une butée 7 avec la première extrémité 16 du levier d'actionnement 4. La figure 3 préfigure le positionnement des butées 6 et des fils de liaison 7 dans le plot 5. Il est supposé que chaque fil de liaison 7 présente une certaine rigidité afin de transmettre le mouvement du levier 4 aux quatre butées 6.

En se référant aux figures 2, 4A, 4B, 5A et 5B chaque pièce 12 du plot 5 comprend un logement 18 périphérique, débouchant sur l'extérieur de ladite pièce 12, ledit logement 18 étant située sur un axe médian de cette pièce 12. Comme le montrent les figures 5A et 5B, les quatre logements 18 sont répartis de façon homogène autour du plot 5, de sorte que deux logements 18 consécutifs sont disposés à 90° l'un de l'autre. Autrement dit, deux logements consécutifs 18 sont situés sur deux axes radiaux et perpendiculaires entre eux. Chaque logement 18 possède une hauteur constante, ladite hauteur étant sa dimension considérée suivant l'axe de révolution du plot 5, et est bordé par deux bords 19 radiaux. Le fond 20 de chaque logement 18 est incurvé en arc de cercle. Chaque butée 6 est ainsi placée dans le logement 18 d'une pièce 12 constituant le plot 5, et est reliée à la première extrémité 16 du levier 4 d'actionnement, par un fil 7 traversant ladite pièce 12, et passant par l'ouverture centrale 13 de l'embase 10 ainsi que par l'ouverture du repose-pied 3 correspondante.

Il est supposé que la première extrémité 16 du levier 4 est située en regard de ces deux ouvertures 13 superposées. Grâce au fil 7 de liaison, chaque butée 6 peut ainsi être déplacée entre une position escamotée à l'intérieure de chaque pièce 12 du plot 5, comme le montrent les figures 4A et 5A, et une position déployée, comme le montrent les figures 4B et 5B. Dans une position déployée, chaque butée 6 émerge radialement de chaque pièce 12 du plot 5, contribuant à élargir localement le cylindre résultant constitué par les quatre pièces 12.

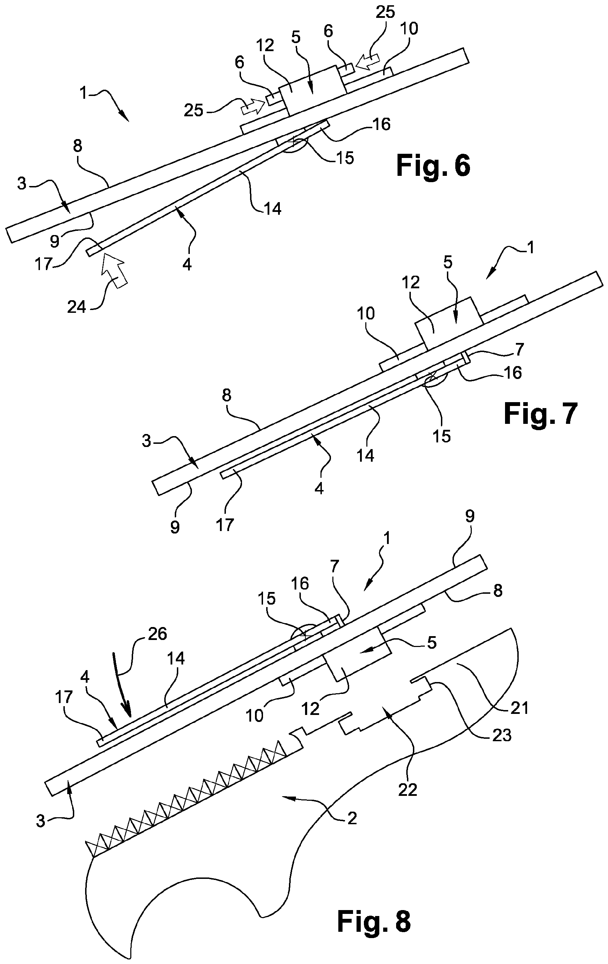

Comme le montre la figure 6, lorsque le système de fixation 1 selon l'invention est monté sur un repose-pied 3 d'un bateau d'aviron, le levier 4 d'actionnement est suspendu sous ledit repose-pied 3. De par sa masse importante, la deuxième extrémité 17 du levier 4 a naturellement tendance à s'écarter du repose-pied 3, entrainant simultanément un rapprochement de la première extrémité 16 dudit levier 4 vers ledit repose-pied 3, puisque lesdites extrémités 16,17 sont placées de part et d'autre de l'axe de rotation 15. Ce rapprochement de la première extrémité 16 engendre un déplacement des fils de liaison 7 qui lui sont rattachés, et donc une poussée des butées 6 hors du plot 5 dans lequel elles sont placées. Dans une situation normale de navigation sur un bateau d'aviron, les butées 6 se retrouvent ainsi dans une position déployée autour du plot 5 sous l'action de la masse du levier 4.

En se référant à la figure 1, chaque chaussure 2 comprend une semelle 21 disposant d'un évidement cylindrique 22 dont l'axe de révolution est perpendiculaire au plan de ladite semelle 21. Cet évidement cylindrique 22 est doté d'une gorge annulaire 23 permettant d'élargir ledit évidement 22. Le diamètre de cet évidement 22 est supérieur au diamètre du plot 5 si bien que ledit plot 5 peut être inséré dans ledit évidement 22, la gorge annulaire 23 constituant un espace de dégagement destiné à accueillir les butées 6 en position déployée. Ces chaussures 2 peuvent être directement conçues avec un évidement 22 dans la semelle 21 et sont, dans ce cas là, uniquement dédiées à la pratique de l'aviron. Selon une autre variante de réalisation, une coque dotée d'une semelle possédant ledit évidement 21, peut venir se fixer autour d'une chaussure de ville ou de sport, afin de pouvoir pratiquer l'aviron.

Concrètement, une personne portant des chaussures 2 dotées d'une semelle 21 possédant un évidement 22, et désireuse de pratiquer l'aviron dans un bateau d'aviron comprenant un repose-pied 3 équipé d'un système de fixation 1 selon l'invention, va effectuer les manoeuvres suivantes :
- une mise en rotation manuelle du levier d'actionnement 4, comme l'illustre la flèche 24 de la figure 6, pour rapprocher sa deuxième extrémité 17 vers la face inférieure 9 dudit repose-pied 3, ce rapprochement entrainant, par construction, un éloignement de sa première extrémité 16 de ladite face inférieure 9. Cet éloignement se traduit par un escamotage des butées 6 à l'intérieur du plot 5 dans le sens indiqué par les deux flèches 25 en sens opposé de la figure 6. Cette opération de manipulation du levier 4 permet d'aboutir à la configuration illustrée à la figure 7. De cette manière, tant que le levier 4 d'actionnement est rabattu contre le repose-pied 23, les butées sont rentrées dans le plot 5.
- une étape de positionnement des chaussures 2 sur le repose-pied 3, en faisant pénétrer les deux plots 5 à l'intérieur de l'évidement 22 de la semelle 21 desdites chaussures 2,
- une étape de relâchement du levier 4, qui pivote par inertie pour retrouver sa position naturelle de repos sous le repose-pied 3. Cette étape de relâchement s'accompagne d'un éloignement de la deuxième extrémité 17 et d'un rapprochement de la première extrémité 16 de la face inférieure 9 du repose-pied 3. Ce rapprochement provoque le déploiement des butées 6 qui saillent alors du plot 5 par l'intermédiaire des fils de liaison 7, pour venir s'insérer dans la gorge annulaire 23 de l'évidement 22 de la semelle 21. Cette étape de relâchement permet d'aboutir à la configuration illustrée à la figure 1, et pour laquelle les chaussures 2 sont solidement fixées au repose-pied 3.

A la fin de son activité d'aviron, la personne refait pivoter le levier 4 vers le repose-pied 3 pour provoquer l'escamotage des butées 6 dans le plot 5, et permettre un retrait des chaussures 2 dudit repose-pied 3.

Une autre caractéristique majeure d'un système de fixation selon l'invention est qu'il présente un niveau de sécurité élevé vis-à-vis d'un pratiquant assis dans le bateau. En effet, lors d'un chavirage, le bateau effectue généralement une rotation de 180° autour de son axe longitudinal, amenant ledit pratiquant sous le bateau, avec des risques non négligeables de noyade. Comme l'illustre la figure 7, après que le bateau ait subi une rotation de 180° dans le cas d'un chavirage, le levier 4 se retrouve au-dessus du repose-pied 3. En raison de son poids, ledit levier 4 a alors naturellement tendance à venir se plaquer par pivotement contre le repose-pied 3 comme le l'indique le sens de la flèche 26. Ce pivotement s'accompagne d'un éloignement de la première extrémité 16 du levier 4 par rapport au repose-pied 3, entrainant un escamotage des butées 6 dans le plot 5. Chaque chaussure 2 n'est alors plus retenue au repose-pied 3 par lesdites butées 6, et le pratiquant, qui se retrouve accidentellement sous le bateau, peut alors s'extirper sans aucune difficulté du bateau, pour pouvoir rapidement se retrouver à l'air libre.

Ainsi, dans le cas d'un chavirage, le système de fixation selon l'invention, est configuré pour que le levier 4 puisse agir sous le seul effet de son poids, afin de libérer les chaussures 2 du repose-pied 3. Dans le cas d'un chavirage, ce système de fixation ne nécessite aucune intervention ou manipulation de la part du pratiquant, pour se détacher du bateau.

## Revendications

1. Système de fixation (1) d'une chaussure (2) sur un repose-pied (3) d'un bateau d'aviron, ledit système de fixation comprenant une semelle (21) et un repose-pied (3) et ledit repose-pied (3) étant assimilable à une plaque possédant une face inférieure (9) et une face supérieure (8), ledit système comprenant au moins une butée mobile (6) saillant de la face supérieure (8) et un levier d'actionnement (4) rigide saillant du repose-pied (3), ledit levier (4) étant relié à ladite au moins une butée (6) de sorte que le déplacement dudit levier (4) entraine le déplacement de ladite au moins une butée (6) entre une position déployée pour laquelle elle vient se loger dans un évidement (22) de la semelle (21), et une position escamotée pour laquelle elle permet une désolidarisation de la chaussure (2) avec le repose-pied (3), **caractérisé en ce que** le levier d'actionnement (4) saille de la face inférieure (9) du repose-pied (3) et **en ce que** ledit système (1) comprend un plot (5) saillant de la face supérieure (8) du repose-pied (3) et supportant chaque butée (6), ledit plot (5) étant destiné à venir se loger dans l'évidement (22) de la chaussure (2) et chaque butée (6) étant apte à passer d'une position déployée pour laquelle elle émerge dudit plot (5) à une position escamotée pour laquelle elle se retrouve à l'intérieur dudit plot (5).

2. Système de fixation selon la revendication 1, **caractérisé en ce qu'**il comprend quatre butées (6) réparties régulièrement autour du plot (5), deux butées (6) successives se retrouvant à 90° l'une de l'autre.

3. Système de fixation selon l'une quelconque des revendications 1 ou 2, **caractérisé en ce que** le plot (5) est cylindrique et saille de la face supérieure (8) de manière à ce que son axe de révolution soit perpendiculaire à ladite face (8), et **en ce que** chaque butée (6) émerge de la surface latérale dudit plot (5) lorsqu'elle se retrouve dans une position déployée.

4. Système de fixation selon l'une quelconque des revendications 1 à 3, **caractérisé en ce que** l'évidement (22) de la semelle possède une gorge annulaire (23) permettant d'élargir ledit évidement (22) dans ladite semelle (21), et **en ce que** chaque butée (6) vient se loger au fond de ladite gorge (23) lorsqu'elle se retrouve dans une position déployée.

5. Système de fixation selon l'une quelconque des revendications 1 à 4, **caractérisé en ce que** chaque butée (6) est reliée au levier (4) au moyen d'un élément relais (7), et **en ce que** le levier (4) est monté mobile sur la face inférieure (9) du repose-pied (3), un déplacement dudit levier (4) entrainant, via chaque élément relais (7), une translation de chaque butée (6) dans le plot (5) pour passer d'une position déployée à une position escamotée et inversement.

6. Système de fixation selon la revendication 5, **caractérisé en ce que** chaque élément relais est un fil de liaison (7), et **en ce que** le levier (4) est mobile en rotation entre une première position permettant aux butées (6) de se retrouver dans une position déployée et une deuxième position permettant auxdites butées (6) de se retrouver dans une position escamotée.

7. Système de fixation selon l'une quelconque des revendications 5 ou 6, **caractérisé en ce que** le levier (4) est configuré pour exercer, par inertie, un effort suffisant sur les éléments relais (7) de manière à maintenir chaque butée (6) dans une position déployée.

8. Système de fixation selon la revendication 7, **caractérisé en ce qu'**un retournement accidentel du bateau provoque un déplacement du levier (4) par inertie, qui entraine un escamotage de chaque butée (6) dans le plot (5), permettant de libérer chaque chaussure du repose-pied (3).

9. Système de fixation selon l'une quelconque des revendications 1 à 8, **caractérisé en ce que** le plot (5), les butées (6) et les fils de liaison (7) sont en métal.

## Patentansprüche

1. Befestigungssystem (1) eines Schuhs (2) auf einer Fußauflage (3) eines Ruderboots, wobei das Befestigungssystem eine Sohle (21) und eine Fußauflage (3) umfasst und die Fußauflage (3) mit einer Platte vergleichbar ist, die eine untere Fläche (9) und eine obere Fläche (8) besitzt, wobei das System mindestens einen beweglichen Anschlag (6), der aus der oberen Fläche (8) hervorsteht, und einen starren Betätigungshebel (4), der aus der Fußauflage (3) hervorsteht, umfasst, wobei der Hebel (4) mit dem mindestens einen Anschlag (6) derart verbunden ist, dass die Verlagerung des Hebels (4) die Verlagerung des mindestens einen Anschlags (6) zwischen einer ausgefahrenen Position, in der er in einer Aussparung (22) der Sohle (21) ruht, und einer eingezogenen Position, in der er eine Trennung des Schuhs (2) von der Fußauflage (3) erlaubt, bewirkt, **dadurch gekennzeichnet, dass** der Betätigungshebel (4) aus der unteren Fläche (9) der Fußauflage (3) hervorsteht und dass das System (1) einen Klotz (5) umfasst, der aus der oberen Fläche (8) der Fußauflage (3) hervorsteht und jeden Anschlag (6) stützt, wobei der Klotz (5) bestimmt ist, in der Aussparung (22) des Schuhs (2) zu ruhen und jeder Anschlag (6) imstande ist, von einer ausgefahrenen Position, in der er aus dem Klotz (5) hervorsteht, in eine eingezogenen Position, in der er sich im Innern des Klotzes (5) befindet, zu wechseln.

2. Befestigungssystem nach Anspruch 1, **dadurch gekennzeichnet, dass** es vier Anschläge (6) umfasst, die gleichmäßig um den Klotz (5) verteilt sind, wobei sich zwei aufeinanderfolgende Anschläge (6) in 90° voneinander befinden.

3. Befestigungssystem nach einem der Ansprüche 1 oder 2, **dadurch gekennzeichnet, dass** der Klotz (5) zylindrisch ist und aus der oberen Fläche (8) derart hervorsteht, dass sich seine Drehachse senkrecht zu der Fläche (8) befindet, und dass jeder Anschlag (6) aus der Seitenfläche des Klotzes (5) hervorsteht, wenn er sich in einer ausgefahrenen Position befindet.

4. Befestigungssystem nach einem der Ansprüche 1 bis 3, **dadurch gekennzeichnet, dass** die Aussparung (22) der Sohle eine ringförmige Nut (23) besitzt, die erlaubt, die Aussparung (22) in der Sohle (21) zu verbreitern, und dass jeder Anschlag (6) auf dem Boden der Nut (23) ruht, wenn er sich in einer ausgefahrenen Position befindet.

5. Befestigungssystem nach einem der Ansprüche 1 bis 4, **dadurch gekennzeichnet, dass** jeder Anschlag (6) mit dem Hebel (4) mit Hilfe eines Verbindungselements (7) verbunden ist und dass der Hebel (4) auf der unteren Fläche (9) der Fußauflage (3) beweglich montiert ist, wobei eine Verlagerung des Hebels (4) eine Verschiebung jedes Anschlags (6), über jedes Verbindungselement (7), in den Klotz (5) bewirkt, um aus einer ausgefahrenen Position in eine eingezogenen Position und zu wechseln und umgekehrt.

6. Befestigungssystem nach Anspruch 5, **dadurch gekennzeichnet, dass** jedes Verbindungselement ein Verbindungsdraht (7) ist und dass der Hebel (4) zwischen einer ersten Position, die es den Anschlägen (6) erlaubt, in eine ausgefahrene Position zu gehen, und einer zweiten Position, die es den Anschlägen (6) erlaubt, in eine eingezogene Position zu gehen, rotierend bewegbar ist.

7. Befestigungssystem nach einem der Ansprüche 5 oder 6, **dadurch gekennzeichnet, dass** der Hebel (4) konfiguriert ist, um durch Trägheit eine Kraft auf die Verbindungselemente (7) auszuüben, die ausreichend ist, dass jeder Anschlag (6) in einer ausgefahrenen Position verbleibt.

8. Befestigungssystem nach Anspruch 7, **dadurch gekennzeichnet, dass** ein versehentliches Umkippen des Boots zu einer Verlagerung des Hebels (4) durch Trägheit führt, was zu einem Einziehen jedes Anschlags (6) in den Klotz (5) führt, was erlaubt, jeden Schuh von der Fußauflage (3) freizugeben.

9. Befestigungssystem nach einem der Ansprüche 1 bis 8, **dadurch gekennzeichnet, dass** der Klotz (5), die Anschläge (6) und die Verbindungsdrähte (7) aus Metall sind.

## Claims

1. A system (1) for fastening a shoe (2) on a foot rest (3) of a rowing boat, said fastening system comprising a soleplate (21) and a foot rest (3) and said foot rest (3) being comparable to a plate having a lower face (9) and an upper face (8), said system comprising at least one moving stop (6) protruding from the upper face (8) and a rigid actuating lever (4) protruding from the foot rest (3), said lever (4) being connected to said at least one stop (6) such that the movement of said lever (4) causes the movement of said at least one stop (6) between a deployed position for which it becomes housed in a recess (22) of the soleplate (21), and a retracted position for which allows a separation of the shoe (2) from the foot rest (3), **characterized in that** the actuating lever (4) protrudes from the lower face (9) of the foot rest (3) and **in that** said system (1) comprises a stud (5) protruding from the upper face (8) of the foot rest (3) and supporting each stop (6), said stud (5) being intended to be housed in the recess (22) of the shoe (2) and each stop (6) being able to go from a deployed position for which it emerges from said stud (5) to a retracted position for which it is located inside said stud (5).

2. The fastening system according to claim 1, **characterized in that** it comprises four stops (6) regularly distributed around the stud (5), two successive stops (6) being at 90° from one another.

3. The fastening system according to any one of claims 1 or 2, **characterized in that** the stud (5) is cylindrical and protrudes from the upper face (8) such that its axis of revolution is perpendicular to said face (8), and **in that** each stop (6) emerges from the lateral surface of said stud (5) when it is in a deployed position.

4. The fastening system according to any one of claims 1 to 3, **characterized in that** the recess (22) of the soleplate has an annular groove (23) making it possible to widen said recess (22) in said soleplate (21), and **in that** each stop (6) becomes housed at the bottom of said groove (23) when it is in a deployed position.

5. The fastening system according to any one of claims 1 to 4, **characterized in that** each stop (6) is connected to the lever (4) using a relay element (7), and **in that** the lever (4) is mounted moving on the lower face (9) of the foot rest (3), a movement of said lever (4) causing, via each relay element (7), a translation of each stop (6) in the stud (5) to go from a deployed position to a retracted position and vice versa.

6. The fastening system according to claim 5, **characterized in that** each relay element is a connecting wire (7), and **in that** the lever (4) is rotatable between a first position allowing the stops (6) to be in a deployed position and a second position allowing said stops (6) to be in a retracted position.

7. The fastening system according to any one of claims 5 or 6, **characterized in that** the lever (4) is configured to exert, by inertia, a sufficient force on the relay elements (7) so as to keep each stop (6) in a deployed position.

8. The fastening system according to claim 7, **characterized in that** an accidental overturning of the boat causes the lever (4) to move by inertia, which drives a retraction of each stop (6) into the stud (5), making it possible to release each shoe from the foot rest (3).

9. The fastening system according to any one of claims 1 to 8, **characterized in that** the stud (5), the stops (6) and the connecting wires (7) are made from metal.
